# EUROPEAN PATENT APPLICATION

(11) **EP 3 173 894 A1**
(43) Date of publication of application: **31.05.2017**
(21) Application number: 15824695.9
(22) Date of filing: 19.06.2015
(51) Int. Cl.: G05G 1/44, F16C 17/10, F16C 17/26, F16C 27/02, F16C 33/04, F16C 33/14, G05G 1/30

(54) **BEARING STRUCTURE FOR VEHICLE PEDAL DEVICE AND FLANGED BUSHING**

(30) Priority: 25.07.2014 JP 2014152417
(71) Applicant: Toyoda Iron Works Co., Ltd., Toyota-shi Aichi 471-8507 (JP)
(72) Inventor: FUJIWARA, Noboru, Toyota-shi Aichi 471-8507 (JP)
(74) Representative: TBK
(86) International application number: PCT/JP2015/067798
(87) International publication number: WO 2016/013337

(57) **Abstract**

The present invention suppresses the occurrence of abnormal sounds and backlash caused by gaps between each section in a vehicle pedal device in which a flanged bushing is disposed between a support member and a boss. The two ends in the axial direction of the cylindrical section (46) of the flanged bushing (42, 44) are both contacted to the inner peripheral surface of the boss (40), and meanwhile a drum shaped section (54) is provided to the intermediate portion in the axial direction of the cylindrical section (46) and at least the minimum diameter section of the drum shaped section (54) is elastically contacted to the outer peripheral surface of a collar (26), and so the drum shaped section (54) is compressed and bent/deformed in the radial direction between the inner peripheral surface of the boss (40) and the outer peripheral surface of the collar (26). Consequently, the support rigidity of the boss (40) is secured by the reaction force resulting from the bending deformation of the drum shaped section (54), and so abnormal sounds, tilting, and backlash in the radial direction of the boss (40) are suppressed.

## Description

### TECHNICAL FIELD

The present invention relates to bearing structures of vehicle pedal devices, and more particularly to an improvement in flanged bushing that is disposed between a support member and a boss.

### BACKGROUND ART

Bearing structures of vehicle pedal devices are known in the art in which a support member having a cylindrical outer peripheral surface is fixedly attached to a pedal bracket to be substantially horizontal, and a boss of a pivot member is disposed radially outside the support member such that the boss can turn about an axis via a pair of flanged bushings each made of a resin and each having a flange portion at one end of a cylindrical portion. In such bearing structures, predetermined clearance (backlash) is typically provided in the radial direction and the axial direction in view of dimensional variation etc. that is caused by manufacturing variation of components. Accordingly, abnormal noise can be generated by wobbling or tilting of the boss of the pivot member (such as a vehicle pedal) with respect to the support member due to an offset load etc. that is applied when the pedal is depressed. As a solution to this, in Patent Document 1, in each of a pair of flanged bushings, a plurality of slits are formed in the end on the flange portion side of the flanged bushing so as to extend to the outer peripheral edge of the flange portion, whereby flexible portions are formed. Generation of abnormal noise is restrained by deflection and deformation of the flexible portions.

### Related Art Documents

Patent Documents

Patent Document 1: Japanese Patent Application Publication No. H03-161813

### SUMMARY OF THE INVENTION

### Problem to be Solved by the Invention

However, when the end on the flange portion side of the flanged bushing is divided into a plurality of portions by the slits, the end on the flange portion side of the flanged bushing is partially deflected and deformed. This reduces support rigidity for the boss, which can still cause wobbling and abnormal noise.

The present invention was developed in view of the above circumstances, and it is an object of the present invention to restrain wobbling and generation of abnormal noise which are caused by clearance between parts in a vehicle pedal device in which flanged bushings are disposed between a support member and a boss.

### Solution to Problem

To achieve the above object, a first aspect of the invention provides a bearing structure of a vehicle pedal device, in which a support member having a cylindrical outer peripheral surface is fixedly attached to a pedal bracket to be substantially horizontal, and a boss of a pivot member is disposed radially outside the support member such that the boss can turn about an axis via a pair of flanged bushings each made of a resin and each having a flange portion at one end of a cylindrical portion, characterized in that (a) both axial ends of the cylindrical portion of the flanged bushing closely contact an inner peripheral surface of the boss, and the cylindrical portion of flanged bushing has, in its intermediate portion in an axial direction, a narrow portion having both inner and outer peripheral surfaces smoothly reduced in diameter so that the narrow portion is curved inward in a radial direction, and (b) a smallest inside diameter dimension of the narrow portion is smaller than an outside diameter dimension of the support member and has an interference, and at least a smallest diameter portion of the narrow portion elastically closely contacts the outer peripheral surface of the support member.

A second aspect of the invention provides the bearing structure of the vehicle pedal device recited in the first aspect of the invention, characterized in that (a) parallel portions each having a constant diameter dimension and parallel to an axis are formed on both sides in the axial direction of the narrow portion so as to be continuous with the narrow portion, and (b) an axial length L1 on the outer peripheral surface side of the narrow portion in a natural state is in a range of 40% to 60% of a total length of the flanged bushing including the flange portion.

A third aspect of the invention provides the bearing structure of the vehicle pedal device recited in the first or second aspect of the invention, characterized in that the narrow portion is formed so that each of the inner and outer peripheral surfaces has an arc shape with a certain radius in a sectional shape including the axis in the natural state, a first radius R1 of the arc of the outer peripheral surface is smaller than a second radius R2 of the arc of the inner peripheral surface, a recessed depth t1 of the arc of the outer peripheral surface is in a range of 0.1 mm to 0.3 mm, and a protruding height t2 of the arc of the inner peripheral surface is in a range of 0.01 mm to 0.2 mm and is smaller than the recessed depth t1.

A fourth aspect of the invention relates to a flanged bushing that is used in the bearing structure of the vehicle pedal device according to any one of the first to third aspects of the invention.

### Advantageous Effects of the Invention

In such a bearing structure of the vehicle pedal device, both axial ends of the cylindrical portion of each flanged bushing closely contact the inner peripheral surface of the boss. The cylindrical portion of each flanged bushing has the narrow portion in its intermediate portion in the axial direction, and at least the smallest diameter part of the narrow portion elastically closely contacts the outer peripheral surface of the support member. The narrow portion is compressed in the radial direction between the inner peripheral surface of the boss and the outer peripheral surface of the support member so as to be deflected and deformed. Support rigidity for the boss is thus ensured by the reaction force (elastic force) generated by the deflection and deformation of the narrow portion, and radial wobbling or tilting of the boss and generation of abnormal noise are restrained. Since both axial ends of the cylindrical portion closely contact the inner peripheral surface of the boss, the attitude of the flanged bushings is stabilized. For example, as compared to the case where the cylindrical portion has a barrel shape with its intermediate portion in the axial direction protruding outward in the radial direction, both axial ends of the cylindrical portion have a larger inside diameter, so that the support member can be easily inserted into the flanged bushings and attached thereto. Ease of assembly is thus satisfactorily maintained.

In the second aspect of the invention, the parallel portions having a constant diameter dimension are formed on both sides of the narrow portion in the axial direction, and the axial length L on the outer peripheral surface side of the narrow portion is about half the total length of the flanged bushing. Since the parallel portions surface-contact the inner peripheral surface of the boss and the outer peripheral surface of the support member, local wear of both axial ends is restrained and durability is improved as compared to the case where the narrow portion is formed along, e.g., the entire length of the cylindrical portion. The axial length L1 of the narrow portion is about half the total length of the flanged bushing. Accordingly, when the narrow portion is deflected and deformed by insertion of the support member, deformation per unit length of the narrow portion is larger than in the case where the narrow portion is formed along the entire length of the cylindrical portion. A larger reaction force is therefore generated, whereby support rigidity is enhanced, and wobbling and generation of abnormal noise can be more appropriately restrained. Moreover, since the flanged bushings contact the support member with a smaller contact area, an increase in sliding resistance that is caused when the flanged bushings turn relative to the support member is restrained while restraining wobbling of the flanged bushings and the support member.

In the third aspect of the invention, both the inner and outer peripheral surfaces have an arc shape as viewed in section of the narrow portion, and the inner peripheral surface is substantially parallel to the axis in a region around the protruding tip end thereof. The narrow portions can therefore be easily deflected and deformed when the support member is inserted into the flanged bushings, whereby ease of assembly is further improved. In particular, the first radius R1 of the arc of the outer peripheral surface is smaller than the second radius R2 of the arc of the inner peripheral surface, and the recessed depth t1 of the arc of the outer peripheral surface is in the range of 0.1 mm to 0.3 mm and is greater than the protruding height t2 of the arc of the inner peripheral surface. The thickness of the narrow portion therefore decreases toward its middle portion in the axial direction, and clearance remains between the inner peripheral surface of the boss and the narrow portion regardless of deflection and deformation of the narrow portion which is caused by insertion of the support member. The deflection allowance for the narrow portion can be appropriately secured, and the support member can be reliably inserted into the flanged bushings while deflecting and deforming the narrow portions. Moreover, wear and an increase in sliding resistance when the boss and the flanged bushings turn relative to each other are restrained. Since the clearance between the inner peripheral surface of the boss and the narrow portion also serves as a grease reservoir, an increase in sliding resistance is restrained preferably. Moreover, ease of insertion of the support member can be more appropriately ensured as compared to the case where groove-like grease reservoirs are formed in the inner peripheral surfaces of the flanged bushings. Since the protruding height t2 of the arc of the inner peripheral surface is as low as 0.01 mm to 0.2 mm, the flanged bushing can be easily removed from a core metal etc. while being elastically deformed after the flanged bushing is molded as a single-piece member. The flanged bushings can thus be easily molded.

The fourth aspect of the invention relates to the flanged bushings of the first to third aspects of the invention. The fourth aspect of the invention has functions and effects substantially similar to those of the first to third aspects of the invention.

### BRIEF DESCRIPTION OF DRAWINGS

FIG. 1 is a left side view illustrating the general configuration of a brake pedal device to which the present invention is applied.
FIG. 2 is an enlarged sectional view taken along line II-II and viewed in the direction II in FIG. 1, showing a bearing portion of a brake pedal.
FIG. 3 is an enlarged perspective view illustrating a pair of flanged bushings that are used in the embodiment of FIG. 1.
FIG. 4 shows multiview drawings illustrating one of the pair of flanged bushings in FIG. 3.
FIG. 5 is an enlarged sectional view taken along line V-V and viewed in the direction V in FIG. 4(b).
FIG. 6 is a sectional view corresponding to FIG. 2, illustrating the step of inserting a collar into the pair of flanged bushings attached to a boss.
FIG. 7 is a sectional view corresponding to FIG. 2, illustrating how the pair of flanged bushings are deformed when a downward load F1 is applied to the brake pedal of the embodiment of FIG. 1.
FIG. 8 is a sectional view corresponding to FIG. 2, illustrating how the pair of flanged bushings are deformed when an offset load F2 is applied to the brake pedal of the embodiment of FIG. 1.
FIG. 9 is a sectional view corresponding to FIG. 6, illustrating the step of inserting the collar into a pair of flanged bushings each having a barrel-shaped cylindrical portion.

### MODES FOR CARRYING OUT THE INVENTION

The present invention is preferably applied to a bearing structure of a support portion of a vehicle pedal such as a brake pedal, a clutch pedal, or an accelerator pedal. In a vehicle pedal device that outputs a pedal operating force via an intermediate lever, the present invention may be applied to a bearing structure of the intermediate lever. The vehicle pedal and the intermediate lever correspond to the pivot member having the boss fixedly fitted therein. The boss is a cylindrical member fixedly attached to a bearing portion of the vehicle pedal or the intermediate lever.

For example, the pedal bracket includes a pair of support plates substantially parallel to each other, and both ends of the support member are fixedly attached to the pair of support plates. For example, the pair of support plates are a pair of substantially parallel side plates of the pedal bracket having a U-shaped section. However, the pair of support plates may be separate members. For example, the support member is a cylindrical collar. The support member is disposed such that its both axial ends substantially perpendicularly contact the inner surfaces of the pair of support plates, and is firmly fixed to the pair of support plates by a fastening bolt etc. inserted through the collar. However, a stepped columnar support member (stepped bolt etc.) whose stepped portion contacts the support plates so as to define the interval between the pair of support plates may also be used.

The flanged bushing has a circular plate-shaped flange portion formed at one end of the cylindrical portion so as to extend substantially perpendicularly and outward in the radial direction. The flanged bushing is formed as a single-piece member from a resin material having predetermined elasticity. The flanged bushing is attached so that the cylindrical portion is fitted into a through hole of the boss until the flange portion substantially contacts an end of the boss. The boss is positioned in the axial direction by the support plates via the flange portion. For example, the flanged bushing is press-fitted in the boss by interference fit of the cylindrical portion and is fixedly attached to the boss. However, the flanged bushing may be disposed such that it can turn relative to the boss.

The cylindrical portion of the flanged bushing has, in its intermediate portion in the axial direction, the narrow portion having the inner and outer peripheral surfaces smoothly reduced in diameter so that the narrow portion is curved inward in the radial direction. The smallest inside diameter dimension of the narrow portion is determined so that at least the smallest diameter part of the narrow portion elastically closely contacts the outer peripheral surface of the support member regardless of dimensional variation of the support member etc. It is desirable that the thickness of the narrow portion decrease toward the middle portion thereof in the axial direction as in the third aspect of the invention. However, the narrow portion may have a substantially constant thickness in the axial direction.

In the second aspect of the invention, the parallel portions are formed on both sides of the narrow portion in the axial direction so as to be continuous with the narrow portion. The axial length L1 on the outer peripheral surface side of the narrow portion in the natural state is in the range of 40% to 60% of the total length of the flanged bushing. However, in the case of carrying out the first aspect of the invention, the axial length L1 may not be in the range of 40% to 60% of the total length of the flanged bushing, or the parallel portions may be omitted so that the entire cylindrical portion serves as the narrow portion. Alternatively, the parallel portion may be formed only on one side of the narrow portion in the axial direction.

In the third aspect of the invention, each of the inner and outer peripheral surfaces of the narrow portion has an arc shape with a certain radius in a sectional shape including the axis in the natural state. However, the inner and outer peripheral surfaces of the narrow portion may have a curved shape other than the arc shape. Alternatively, each of the inner and outer peripheral surfaces of the narrow portion may be formed by a pair of tapered surfaces so that the diameter of the narrow portion decreases toward the middle portion thereof in the axial direction. One of the inner and outer peripheral surfaces may be a tapered surface and the other may have a curved shape in section. The inner and outer peripheral surfaces of the narrow portion can thus be implemented in various forms. Even the narrow portion having such a tapered surface(s) and/or such a surface having a curved shape in section may be formed so that the thickness of the narrow portion decreases toward the middle portion thereof in the axial direction.

In the third aspect of the invention, the first radius R1 of the arc of the outer peripheral surface is smaller than the second radius R2 of the arc of the inner peripheral surface, the recessed depth t1 of the arc of the outer peripheral surface is in the range of 0.1 mm to 0.3 mm, and the protruding height t2 of the arc of the inner peripheral surface is in the range of 0.01 mm to 0.2 mm and is smaller than the recessed depth t1. However, in the case of carrying out other aspects of the invention, the radii R1, R2 may be R1 = R2 or may be R1 > R2. The recessed depth t1 of the arc of the outer peripheral surface may not be in the range of 0.1 mm to 0.3 mm, and the protruding height t2 of the arc of the inner peripheral surface may not be in the range of 0.01 mm to 0.2 mm. The recessed depth t1 and the protruding height t2 may be the same, or the protruding height t2 may be larger than the recessed depth t1.

### Embodiment

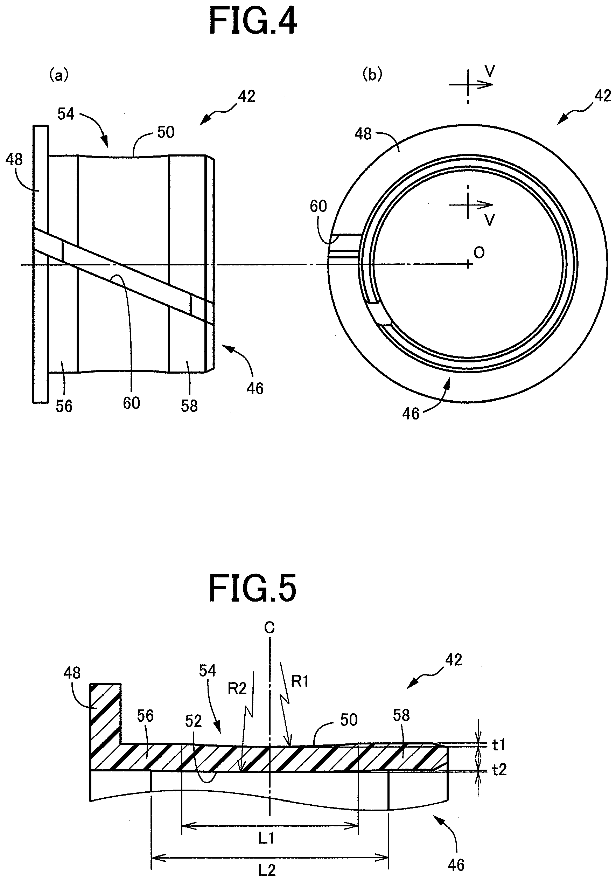

An embodiment of the present invention will be described in detail below with reference to the accompanying drawings. In the following embodiment, the drawings other than FIGS. 4 and 5 are shown simplified or deformed as appropriate for explanation purposes, and the proportions, shapes, etc. of the parts are not necessarily accurately shown in the drawings. The proportions and shapes shown in FIGS. 4 and 5 are close to the actual proportions and shapes in order to facilitate understanding.

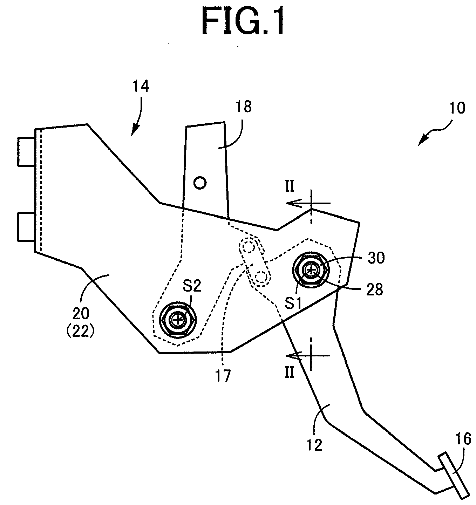

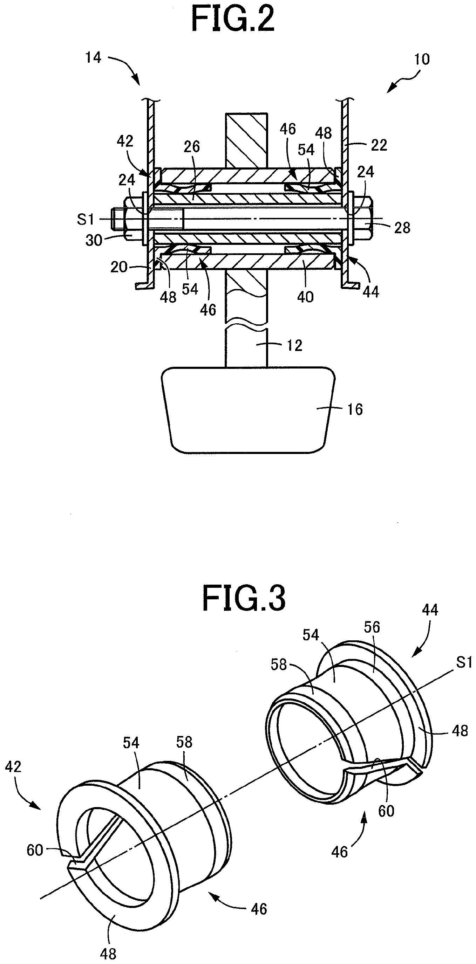

FIG. 1 is a left side view showing a brake pedal device 10 for service brakes of vehicles to which the present invention is applied, and FIG. 2 is an enlarged sectional view taken along line II-II and viewed in the direction II in FIG. 1. The brake pedal device 10 includes a brake pedal 12. The brake pedal 12 is supported at its upper end by a pedal bracket 14 such that the brake pedal 12 can pivot about a support axis S1, which is substantially horizontal. A stepping portion 16 such as a pedal sheet is fixedly attached to the lower end of the brake pedal 12. When the driver depresses the stepping portion 16, the brake pedal 12 pivots clockwise about the support axis S1 in FIG. 1, and the depressing force is transmitted to an output member such as a pushrod, not shown, via a coupling link 17 and an intermediate lever 18, so that a brake oil pressure is generated according to the depressing force. The intermediate lever 18 is disposed in the pedal bracket 14 such that the intermediate lever 18 can pivot about a support axis S2 substantially parallel to the support axis S1. The brake pedal device 10 corresponds to the vehicle pedal device. The brake pedal 12 is a vehicle pedal and corresponds to the pivot member.

The pedal bracket 14 has a U-shape that is bent on the front side of a vehicle, as viewed in plan from above in FIG. 1. The pedal bracket 14 has a pair of support plates 20, 22 formed as a single-piece member. The pair of support plates 20, 22 are in the form of substantially parallel side plates and are disposed at a predetermined interval therebetween. The brake pedal 12 is supported between the pair of support plates 20, 22. Each of the pair of support plates 20, 22 has an insertion hole 24 at substantially the same position as the support axis S1. A cylindrical collar 26 is disposed between the support plates 20, 22 and substantially perpendicularly contacts the opposing inner surfaces of the support plates 20, 22. A fastening bolt 28 is inserted through the insertion holes 24 of the pair of support plates 20, 22 and a through hole of the collar 26. A nut 30 is screwed on the distal end of the fastening bolt 28 which projects from the support plate 20. The collar 26 is thus clamped in the axial direction and firmly fixed between the pair of support plates 20, 22. The collar 26 corresponds to the support member having the cylindrical outer peripheral surface. The axis of the collar 26 is the support axis S1 and substantially matches the central line of the insertion holes 24.

A cylindrical boss 40 having a larger diameter than the collar 26 is fixedly attached to the upper end of the brake pedal 12 by welding etc. Flanged bushings 42, 44 are disposed in both axial ends of the boss 40. The flanged bushings 42, 44 have the same shape, and each of the flanged bushings 42, 44 is a single-piece member made of a synthetic resin material. Each of the flanged bushings 42, 44 has a cylindrical portion 46 that, in a natural state, has an outside diameter slightly larger than the inside diameter of the boss 40. A flange portion 48 having the shape of a circular plate with a large diameter is formed integrally with one end of the cylindrical portion 46 so as to extend substantially perpendicularly and outward in the radial direction. The cylindrical portions 46 are press-fitted in a through hole of the boss 40, whereby the pair of flanged bushings 42, 44 are fixedly attached to both ends of the boss 40. The collar 26 is inserted through the cylindrical portions 46 such that the collar 26 can turn relative to the cylindrical portions 46. The boss 40 is thus supported by the collar 26 via the pair of flanged bushings 42, 44 such that the boss 40 can turn about the support axis S1, and the boss 40 is positioned in the axial direction by the pair of support plates 20, 22 via the flange portions 48 of the pair of flanged bushings 42, 44.

FIG. 3 is a perspective view of the pair of flanged bushings 42, 44, and FIG. 4 shows multiview drawings of one flanged bushing 42 located on the left side in FIG. 2. FIG. 4(a) is a front view as viewed in the direction perpendicular to an axis O, and FIG. 4(b) is a right side view as viewed from the right side of FIG. 4(a), namely from the opposite side from the flange portion 48. FIG. 5 is an enlarged sectional view of the flanged bushing 42 taken along line V-V and viewed in the direction V in FIG. 4(b). FIGS. 4 and 5 are diagrams showing the shape of the flanged bushing 42 in the natural state, namely the shape of the flanged bushing 42 before assembly. As can be seen from these figures, the cylindrical portion 46 of the flanged bushing 42 has, in its middle portion in the axial direction, a narrow portion 54 having an outer peripheral surface 50 and an inner peripheral surface 52 which are smoothly reduced in diameter so that the narrow portion 54 is curved inward in the radial direction. Parallel portions 56, 58 each having a constant diameter dimension and parallel to the axis O are formed on both sides of the narrow portion 54 in the axial direction so as to be continuous with the narrow portion 54. The outside diameter dimension of each parallel portion 56, 58 is slightly larger than the inside diameter dimension of the boss 40. The cylindrical portion 46 is thus press-fitted in the boss 40 and fixedly fitted therein so as to closely contact the inner peripheral surface of the boss 40 with a predetermined interference. The flanged bushing 42 has a slit 60 formed along its entire axial length including the flange portion 48 so as to be tilted at a tilt angle of about 20° to 25° with respect to the axis O. This allows the cylindrical portion 46 to be press-fitted and fixed in the boss 40 regardless of dimensional variation of the boss 40.

The narrow portion 54 is formed so that each of the outer peripheral surface 50 and the inner peripheral surface 52 has an arc shape with a certain radius in a sectional shape including the axis O in the natural state, namely in the sectional view of FIG. 5. The first radius R1 of the arc of the outer peripheral surface 50 is smaller than the second radius R2 of the arc of the inner peripheral surface 52. The recessed depth t1 of the arc of the outer peripheral surface 50 is in the range of 0.1 mm to 0.3 mm (in the present embodiment, about 0.15 mm), and the protruding height t2 of the arc of the inner peripheral surface 52 is in the range of 0.01 mm to 0.2 mm and is smaller than the recessed depth t1 (in the present embodiment, about 0.04 mm). The thickness of the narrow portion 54 decreases toward its middle portion in the axial direction. The centers of the first and second radii R1 and R2 are determined on a common straight line C perpendicular to the axis O. The outer peripheral surface 50 and the inner peripheral surface 52 are formed symmetrically with respect to the straight line C. The smallest inside diameter dimension of the narrow portion 54, namely the inside diameter dimension of the inner peripheral surface 52 along the straight line C, is smaller than the outside diameter dimension of the collar 26, so that the collar 26 is inserted through the flanged bushing 42 with a predetermined interference. At least the smallest diameter part of the narrow portion 54 is thus elastically pressed outward in the radial direction by the collar 26 and elastically deformed, and elastically closely contacts the outer peripheral surface of the collar 26. The smallest inside diameter dimension of the narrow portion 54 is determined so that at least the smallest diameter part of the narrow portion 54 closely contacts the outer peripheral surface of the collar 26 regardless of the dimensional variation of the collar 26.

The axial length L1 on the outer peripheral surface 50 side of the narrow portion 54 is in the range of 40% to 60% of the total axial length of the flanged bushing 42 including the flange portion 48, and in the present embodiment, about 50%. The axial length L2 on the inner peripheral surface 52 side of the narrow portion 54 is larger than the axial length L1 on the outer peripheral surface 50 side of the narrow portion 54. The narrow portion 54 smoothly connects to the parallel portions 56, 58 on both sides such that their boundaries have, e.g., an arc shape with a radius of about R2 in section of FIG. 5. Each of the axial lengths L1, L2 are defined as the dimensions between the intersections obtained by extending the respective arc having the first or second radius R1 or R2 and the parallel portions 56, 58 in the sectional view of FIG. 5.

In such a bearing structure of the brake pedal 12 of the present embodiment, both axial ends of the cylindrical portion 46 of each flanged bushing 42, 44 closely contact the inner peripheral surface of the boss 40. The cylindrical portion 46 of each flanged bushing 42, 44 has the narrow portion 54 in its intermediate portion in the axial direction, and at least the smallest diameter part of the narrow portion 54 elastically closely contacts the outer peripheral surface of the collar 26. The narrow portion 54 is compressed in the radial direction between the inner peripheral surface of the boss 40 and the outer peripheral surface of the collar 26 so as to be deflected and deformed. Support rigidity for the boss 40 is thus ensured by the reaction force generated by the deflection and deformation of the narrow portion 54, and radial wobbling or tilting of the boss 40 and generation of abnormal noise are restrained.

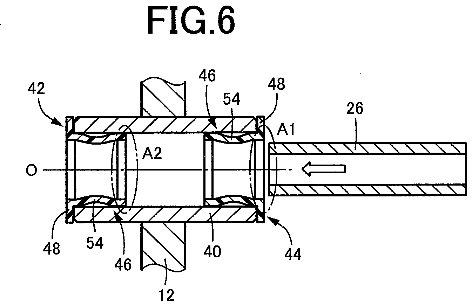

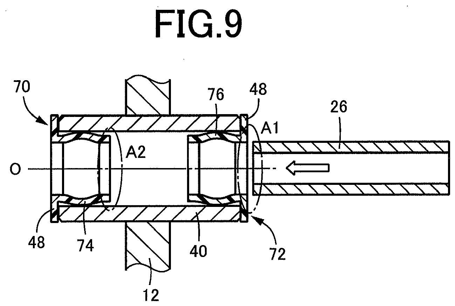

Since both axial ends of the cylindrical portion 46 closely contact the inner peripheral surface of the boss 40, the attitude of the flanged bushings 42, 44 is stabilized. For example, as compared to the case where the cylindrical portion 46 has a barrel shape with its intermediate portion in the axial direction protruding outward in the radial direction, both axial ends of the cylindrical portion 46 have a larger inside diameter, so that the collar 26 can be easily inserted into the flanged bushings 42, 44 and attached thereto. Ease of assembly is thus satisfactorily maintained. FIG. 6 is a sectional view showing the step of attaching the collar 26 to the boss 40 having the pair of flanged bushings 42, 44 attached thereto. In this case, the collar 26 is inserted from the flange portion 48 side of the flanged bushing 44, and the collar 26 needs to be inserted into through holes of the flanged bushings 44, 42 in regions A1, A2. Since both axial ends of each flanged bushing 42, 44 are in close contact with the inner peripheral surface of the boss 40, the axial ends of each flanged bushing 42, 44 have a relatively large inside diameter dimension. The insertion operation can therefore be performed relatively easily. However, for example, if flanged bushings 70, 72 have barrel-shaped cylindrical portions 74, 76 with their intermediate portions in the axial direction protruding outward in the radial direction as shown in FIG. 9, the flanged bushings 70, 72 have a smaller inside diameter at their both axial ends. Accordingly, the flanged bushings 70, 72 are more likely to interfere with the collar 26 in the regions A1, A2 where the collar 26 is inserted, which reduces ease of assembly.

The parallel portions 56, 58 having a constant diameter dimension are formed on both sides of the narrow portion 54 in the axial direction, and the axial length L on the outer peripheral surface side of the narrow portion 54 is about half the total length of the flanged bushing 42, 44. Since the parallel portions 56, 58 surface-contact the inner peripheral surface of the boss 40 and the outer peripheral surface of the collar 26, local wear of both axial ends is restrained and durability is improved as compared to the case where the narrow portion 54 is formed along, e.g., the entire length of the cylindrical portion 46. The axial length L1 of the narrow portion 54 is about half the total length of the flanged bushing 42, 44. Accordingly, when the narrow portion 54 is deflected and deformed by insertion of the collar 26, deformation per unit length of the narrow portion 54 is larger than in the case where the narrow portion 54 is formed along the entire length of the cylindrical portion 46. A larger reaction force is therefore generated, whereby support rigidity for the boss 40 is enhanced, and wobbling of the boss 40 and generation of abnormal noise can be more appropriately restrained. Moreover, since the flanged bushings 42, 44 contact the collar 26 with a smaller contact area, an increase in sliding resistance that is caused when the flanged bushings 42, 44 turn relative to the collar 26 is restrained while restraining wobbling of the flanged bushings 42, 44 and the collar 26. Depression operability of the brake pedal 12 is satisfactorily maintained.

Both the outer peripheral surface 50 and the inner peripheral surface 52 have an arc shape as viewed in section of the narrow portion 54, and the inner peripheral surface 52 is substantially parallel to the axis O in a region around the protruding tip end thereof. The narrow portions 54 can therefore be easily deflected and deformed when the collar 26 is inserted into the flanged bushings 42, 44, whereby ease of assembly is further improved. In particular, the first radius R1 of the arc of the outer peripheral surface 50 is smaller than the second radius R2 of the arc of the inner peripheral surface 52, and the recessed depth t1 of the arc of the outer peripheral surface 50 is in the range of 0.1 mm to 0.3 mm and is greater than the protruding height t2 of the arc of the inner peripheral surface 52. The thickness of the narrow portion 54 therefore decreases toward its middle portion in the axial direction, and clearance remains between the inner peripheral surface of the boss 40 and the narrow portion 54 regardless of deflection and deformation of the narrow portion 54 which is caused by insertion of the collar 26. The deflection allowance for the narrow portion 54 can be appropriately secured, and the collar 26 can be reliably inserted into the flanged bushings 42, 44 while deflecting and deforming the narrow portions 54. Since the protruding height t2 of the arc of the inner peripheral surface 52 is as low as 0.01 mm to 0.2 mm, the flanged bushing 42, 44 can be easily removed from a core metal etc. while being elastically deformed after the flanged bushing 42, 44 is molded as a single-piece member. The flanged bushings 42, 44 can thus be easily molded.

In the case where the boss 40 and the flanged bushings 42, 44 turn relative to each other, the contact area between the boss 40 and the flanged bushings 42, 44 is small due to the clearance remaining between the inner peripheral surface of the boss 40 and the narrow portions 54, whereby wear and an increase in sliding resistance are restrained. Since the clearance also serves as a grease reservoir, an increase in sliding resistance is restrained preferably. Moreover, ease of insertion of the collar 26 can be more appropriately ensured as compared to the case where groove-like grease reservoirs are formed in the inner peripheral surfaces of the flanged bushings 42, 44. That is, in the case where groove-like grease reservoirs are formed in the inner peripheral surfaces of the flanged bushings 42, 44, the collar 26 may be caught by grooves of the grease reservoirs during insertion of the collar 26, and insertion of the collar 26 may be hindered.

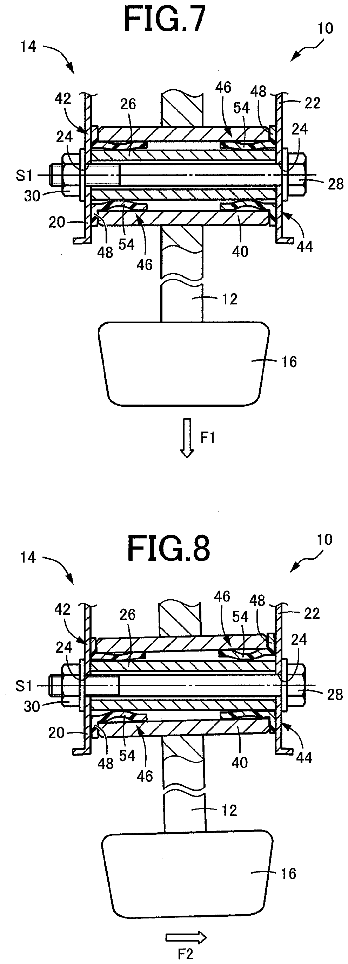

FIG. 7 shows the case where a downward load F1 is applied when the brake pedal 12 is depressed. Since both the right and left flanged bushings 44, 42 are pressed against the collar 26 by the boss 40 from above, the narrow portions 54 are more deflected and deformed and flattened in the regions above the support axis S1, and are less deflected and deformed in the regions below the support axis S 1. This deformation of the narrow portions 54 of the flanged bushings 42, 44 restrains wobbling and generation of abnormal noise, and the reaction force generated by this deformation restrains excessive deflection and deformation of the flanged bushings 42, 44. Support rigidity that supports the boss 40 concentrically with the support axis S1 is thus appropriately ensured, and wobbling (downward displacement) of the brake pedal 12 due to displacement of the boss 40 is restrained, whereby a satisfactory operation feeling is maintained.

FIG. 8 shows the case where a rightward offset load F2 is applied to the stepping portion 16 when the brake pedal 12 is depressed. Since the left flanged bushing 42 is pressed against the collar 26 by the boss 40 from above, the narrow portion 54 of the flanged bushing 42 is more deflected and deformed and flattened in the region above the support axis S1, and is less deflected and deformed in the region below the support axis S1. Since the right flanged bushing 44 is pressed against the collar 26 by the boss 40 from below, the narrow portion 54 of the flanged bushing 44 is more deflected and deformed and flattened in the region below the support axis S1, and is less deflected and deformed in the region above the support axis S 1. This deformation of the narrow portions 54 of the flanged bushings 42, 44 restrains wobbling and generation of abnormal noise, and the reaction force generated by this deformation restrains excessive deflection and deformation of the flanged bushings 42, 44. Support rigidity that supports the boss 40 concentrically with the support axis S1 is thus appropriately ensured, and a change in attitude (tilting) of the brake pedal 12 due to displacement of the boss 40 is restrained, whereby a satisfactory operation feeling is maintained.

Although illustration and detailed description are omitted, in the present embodiment, the bearing structure that attaches the intermediate lever 18 to the pedal bracket 14 such that the intermediate lever 18 can pivot about the support axis S2 is also configured in a manner similar to the bearing structure of the brake pedal 12.

Although the embodiment of the present invention is described above in detail based on the drawings, this embodiment is shown by way of example only, and the present invention can be embodied in various modified or improved forms based on the knowledge of those skilled in the art.

### REFERENCE SIGNS LIST

10: Brake pedal device (Vehicle pedal device) 12: Brake pedal (Pivot member) 14: Pedal bracket 18: Intermediate lever (Pivot member) 26: Collar (Support member) 40: Boss 42, 44: Flanged bushing 46: Cylindrical portion 48: Flange portion 54: Narrow portion 56, 58: Parallel portion R1, R2: First, Second radius of arc t1 : Recessed depth t2: Protruding height

## Claims

1. A bearing structure of a vehicle pedal device, in which a support member having a cylindrical outer peripheral surface is fixedly attached to a pedal bracket to be substantially horizontal, and a boss of a pivot member is disposed radially outside the support member via a pair of flanged bushings each made of a resin and each having a flange portion at one end of a cylindrical portion such that the boss can turn about an axis, **characterized in that**
both axial ends of the cylindrical portion of the flanged bushing closely contact an inner peripheral surface of the boss, and the cylindrical portion of flanged bushing has, in its intermediate portion in an axial direction, a narrow portion having both inner and outer peripheral surfaces smoothly reduced in diameter so that the narrow portion is curved inward in a radial direction, and
a smallest inside diameter dimension of the narrow portion is smaller than an outside diameter dimension of the support member and has an interference, and at least a smallest diameter portion of the narrow portion elastically closely contacts the outer peripheral surface of the support member.

2. The bearing structure of the vehicle pedal device according to claim 1, **characterized in that**
parallel portions each having a constant diameter dimension and parallel to an axis are formed on both sides in the axial direction of the narrow portion so as to be continuous with the narrow portion, and
an axial length L1 on the outer peripheral surface side of the narrow portion in a natural state is in a range of 40% to 60% of a total length of the flanged bushing including the flange portion.

3. The bearing structure of the vehicle pedal device according to claim 1 or 2, **characterized in that**
the narrow portion is formed so that each of the inner and outer peripheral surfaces has an arc shape with a certain radius in a sectional shape including the axis in the natural state, a first radius R1 of the arc of the outer peripheral surface is smaller than a second radius R2 of the arc of the inner peripheral surface, a recessed depth t1 of the arc of the outer peripheral surface is in a range of 0.1 mm to 0.3 mm, and a protruding height t2 of the arc of the inner peripheral surface is in a range of 0.01 mm to 0.2 mm and is smaller than the recessed depth t1.

4. A flanged bushing that is used in the bearing structure of the vehicle pedal device according to any one of claims 1 to 3.
